# EUROPÄISCHE PATENTSCHRIFT

(11) **EP 1 808 316 B1**
(45) Veröffentlichungstag und Bekanntmachung des Hinweises auf die Patenterteilung: **26.05.2010**
(21) Anmeldenummer: 06026127.8
(22) Anmeldetag: 16.12.2006
(51) Int. Cl.: B60G 15/06

(54) **Lagerung für einen Schwingungsdämpfer**
Mounting for a vibration damper
Support pour un amortisseur de vibrations

(30) Priorität: 17.01.2006 DE 102006002393
(43) Veröffentlichungstag der Anmeldung: 18.07.2007
(73) Patentinhaber: ZF Friedrichshafen AG, 88046 Friedrichshafen (DE)
(72) Erfinder: Pflaum, Thomas, 96049 Bamberg (DE)

(56) Entgegenhaltungen:
- DE-C1- 10 051 769
- JP-A- 2002 019 441
- US-A- 4 604 797

## Beschreibung

Die Erfindung betrifft eine Lagerung für einen Schwingungsdämpfer gemäß dem Oberbegriff von Patentanspruch1.

Die DE 100 51 769 C1, ältere DE 10 2004 039 734 oder die ältere DE 10 2005 035 256 beschreiben eine Lagerkappe für eine Lagerung eines Schwingungsdämpfers, wobei die Lagerkappe aufgrund ihrer Verdrehflächen eine Orientierung der Lagerung im Fahrzeug bewirkt, um Öffnungen im Fahrzeugaufbau und in der Lagerung zur Befestigung des Schwingungsdämpfers in Überdeckung zu bringen.

Die DE 10 2004 039 734 und die DE 10 2005 035 256 betreffen Lagerkappen, die nicht nur eine Verdrehfunktion übernehmen, sondern zusätzlich eine axiale Haltefunktion während des Montageablaufs. Beim Montageablauf sind zwei Verfahrensabläufe bekannt. Zum einen kann man die Fahrzeugachse am Fahrzeugaufbau montieren und anschließend den Schwingungsdämpfer mit der Lagerung in den Radkasten des Fahrzeugaufbaus einführen. Die Lagerkappe muss in diesem Fall nur das Gewicht des Schwingungsdämpfers und des Rades mit dem federnden Achsteil tragen. Mit den genannten Lagerkappen ist diese Belastung erfüllbar. Man kann die Montage aber auch derart ablaufen lassen, dass das Gewicht der kompletten Achse von den Lagerkappen einer Achse getragen werden muss, bis die Befestigungsmittel zwischen Lagerung und Fahrzeugaufbau geschlossen sind.

Erste Versuche haben ergeben, dass die Lagerkappe diese Belastung im Bereich der Schnapphaken zwischen der Lagerkappe und dem Fahrzeugaufbau nicht tragen kann. Eine Lösungsmöglichkeit für dieses Problem könnte darin bestehen, dass man z. B. glasfaserverstärkte Kunststoffe mit einer höheren Zugfestigkeit einsetzt. Es hat sich aber keine befriedigende Verbesserung gezeigt. Man könnte auch den Montageablauf modifizieren, doch bietet der Montageablauf mit der kompletten Achse Vorteile, die höher zu bewerten sind als das Problem der mangelnden Tragfähigkeit bei der Lagerkappe.

Aus der DE 100 18 058 A1 ist eine Lagerkappe für einen Schwingungsdämpfer bekannt, die auf dem außenliegenden Ende einer Kolbenstange aufgeschraubt ist. Die Lagerung selbst ist zwischen einem Absatz der Kolbenstange und einer Befestigungsmutter fixiert. Bei dieser Konstruktion tritt das Problem der Haltekräfte zur Lagerung nicht auf, andererseits wird für das Befestigungsgewinde der Lagerkappe ein deutlich größerer axialer Bauraum benötigt.

Aufgabe der vorliegenden Erfindung ist es, eine Lagerkappe zu realisieren, die im Vergleich zum Stand der Technik eine deutlich größere Haltekraft übernehmen kann.

Erfindungsgemäß wird die Aufgabe dadurch gelöst, dass die Lagerkappe radial elastische Haltemittel aufweist, die mit der Lagerung des Schwingungsdämpfers eine Formschlussverbindung eingehen und den Schwingungsdämpfer tragen, wobei die Haltemittel von mindestens einem metallischen Tragsteg zumindest teilunterstützt werden.

Der große Vorteil besteht darin, dass durch den metallischen Tragsteg die zulässige Tragfähigkeit sehr deutlich steigt. Aufgrund der Grundform der Lagerkappe kann diese bereits sehr große Kräfte übernehmen und ermöglicht auch die Anwendung relativ einfacher Werkstoffqualitäten.

In weiterer vorteilhafter Ausgestaltung ist der metallische Tragsteg von dem spritzfähigen Werkstoff der Lagerkappe umspitzt und damit axial eingebunden. Der metallische Tragsteg ist gegen Herausfallen und Verdrehung gesichert.

Um die Formschlussverbindung zwischen der Lagerkappe und dem Lager möglichst kompakt zu gestalten, ist der metallische Tragsteg im Fußbereich von der Lagerkappe eingebunden. Zumindest der Längenabschnitt, der die Formschlussverbindung eingeht, weist keine Kunststoffbeschichtung auf.

Bei einer alternativen Lösung weist der Tragsteg zwei in einem Winkel zueinander verlaufende Schenkel auf, wobei ein axial verlaufender Schenkel in die Lagerung eingreift und der zweite Schenkel auf einer Deckfläche der Lagerkappe anliegt. Der große Vorteil besteht darin, dass für die Lagerkappe ein vergleichsweise einfaches Spritzwerkzeug verwendet werden kann.

Die Lagerkappe weist eine Durchgangsöffnung für den axial verlaufenden Schenkel auf, wobei sich der zweite Schenkel auf der Oberseite der Lagerkappe abstützt.

Die Lagerkappe verfügt über zwei axial verlaufende Schenkel, so dass der Tragsteg einen im Wesentlichen u-förmigen Querschnitt mit zwei Haltemitteln aufweist.

Gemäß einem vorteilhaften Unteranspruch weist der Tragsteg mindestens einen Widerhaken aufweist, der den Tragsteg gegen Herausfallen aus der Lagerkappe sichert.

Der Tragsteg weist mindestens ein radial ausgestelltes Federsegment auf, das in eine Öffnung der Lagerkappe eingreift. Zusätzliche Sicherungsmittel wie Schrauben o. ä. sind nicht notwendig.

Wenn man Wert auf eine möglichst geschlossene Lagerkappe legt, dann kann der Tragsteg auch auf der inneren Deckseite der Lagerkappe aufliegen.

Anhand der folgenden Figurenbeschreibung soll die Erfindung näher erläutert werden.

Es zeigt:
- Fig. 1: Darstellung der Einbausituation
- Fig. 2: Lagerkappe in der Ansicht von unten mit umspritzten Haltestegen.
- Fig. 3 - 5: Lagerkappe in Alternativausführung
- Fig. 6- 7: Abwandlung zu den Fig. 3 - 5
- Fig. 8: Draufsicht eines Trägers der Lagerung

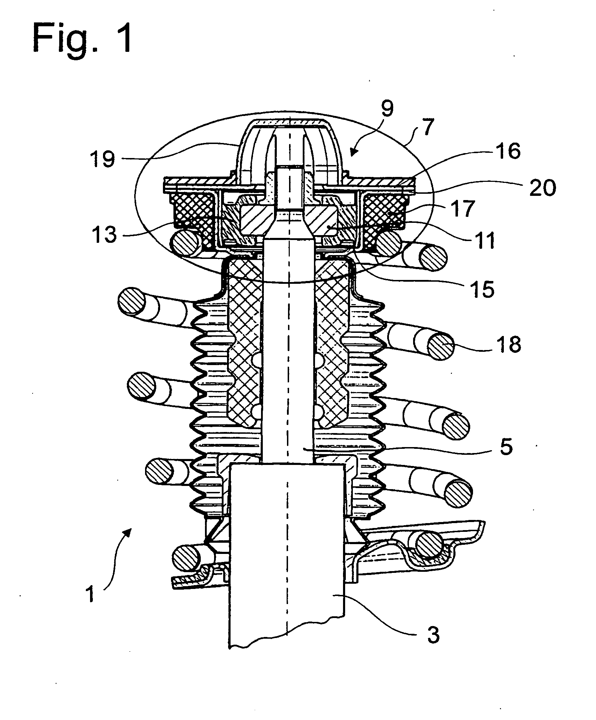

Die Fig. 1 zeigt die Einbausituation für das obere Ende eines Schwingungsdämpfers 1, der einen Zylinder 3 umfasst, in dem eine Kolbenstange 5 axial beweglich gelagert ist. An ihrem äußeren Ende weist die Kolbenstange eine Lagerung 7 an ein Fahrzeug auf, von dem nur eine Aufnahmeöffnung 9 z. B. in einem Innenkotflügel des Fahrzeugs ausgeführt ist.

Die Lagerung 7 umfasst einen Stützkörper 11, der von einem Federelement 13 zumindest teilweise eingeschlossen wird. Das Federelement wiederum wird von einem zweiteiligen Lagergehäuse 15 mit einem Träger 16 und einem Lagertopf 20 gekammert, an dem sich außenseitig eine Federunterlage 17 für eine Fahrzeugtragfeder 18 abstützt. Die gesamte Lagerung wird von einer Lagerkappe 19 abgedeckt.

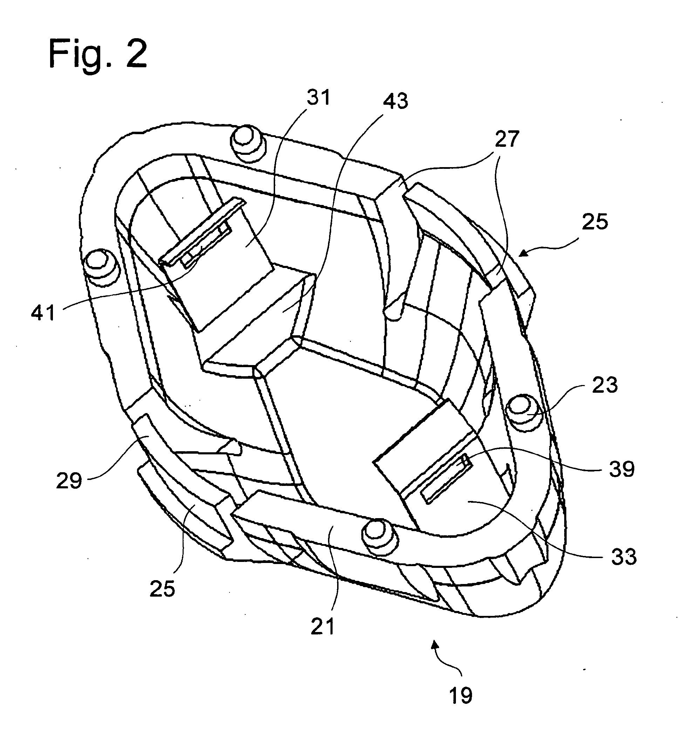

Die Fig. 2 zeigt eine erste Ausführung der Lagerkappe 19, die eine elliptische Grundfläche 21 und eine konische Grundform aufweist. Ausgehend von der Grundfläche erstrecken sich in Axialrichtung der Lagerkappe Zapfen 23, die drehmomentübertragend in den Träger 16 eingreifen. Des Weiteren sind radial elastische Zungen 25 erkennbar, durch axial verlaufende Schlitze 27 freigeschnitten sind und deren Halteflächen 29 auf dem Innenkotflügel aufliegen.

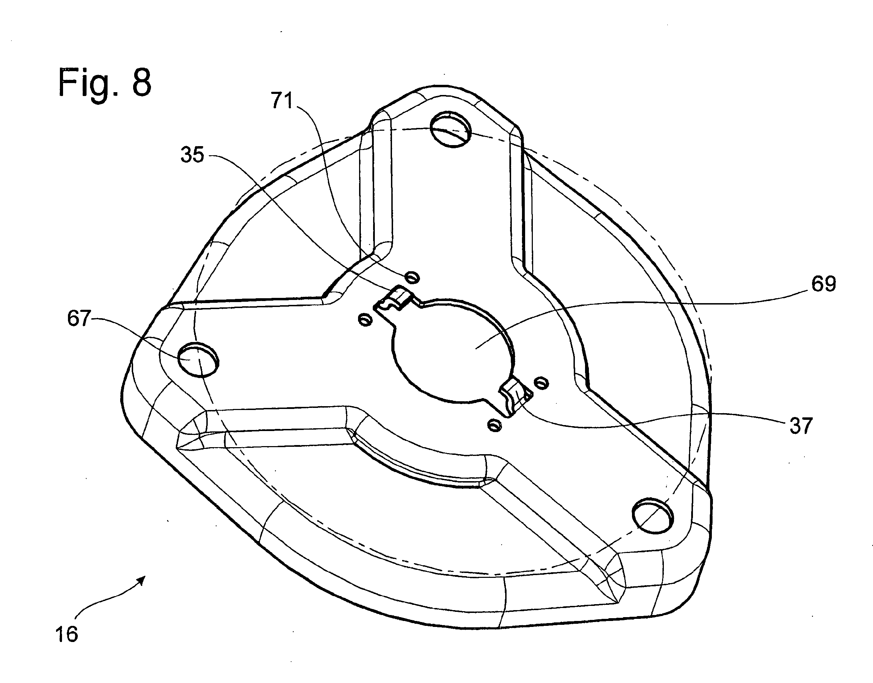

Innerhalb der Lagerkappe sind zwei im Wesentlichen parallel in Achsrichtung der Lagerkappe verlaufende metallische Tragstege 31; 33 angeordnet, die ebenfalls radial elastisch ausgeführt sind und mit Zungen 35; 37 des Trägers 16 (Fig. 8) über Aufnahmen 39; 41 in Eingriff gebracht werden und damit eine axial tragende Formschlussverbindung zwischen der Lagerkappe 19 und dem Träger 16 herstellen. Die Lagerkappe 19 besteht aus einem spritzfähigen Kunststoff. Die Tragstege 31; 33 können vollständig von dem Kunststoff umspritzt sein, in dieser Darstellung beschränkt sich die Einbindung auf einen Fußbereich 43 der Lagerkappe. Die Tragstege übernehmen damit je nach Ausgestaltung der Umspritzung einen Teil der Zugkräfte, die ausgehend vom Gewicht des Schwingungsdämpfers und ggf. daran befestigter Achsteile auf die Lagerkappe wirken, solange Befestigungsmittel zwischen dem Träger 16 und dem Fahrzeugaufbau noch nicht in Eingriff sind.

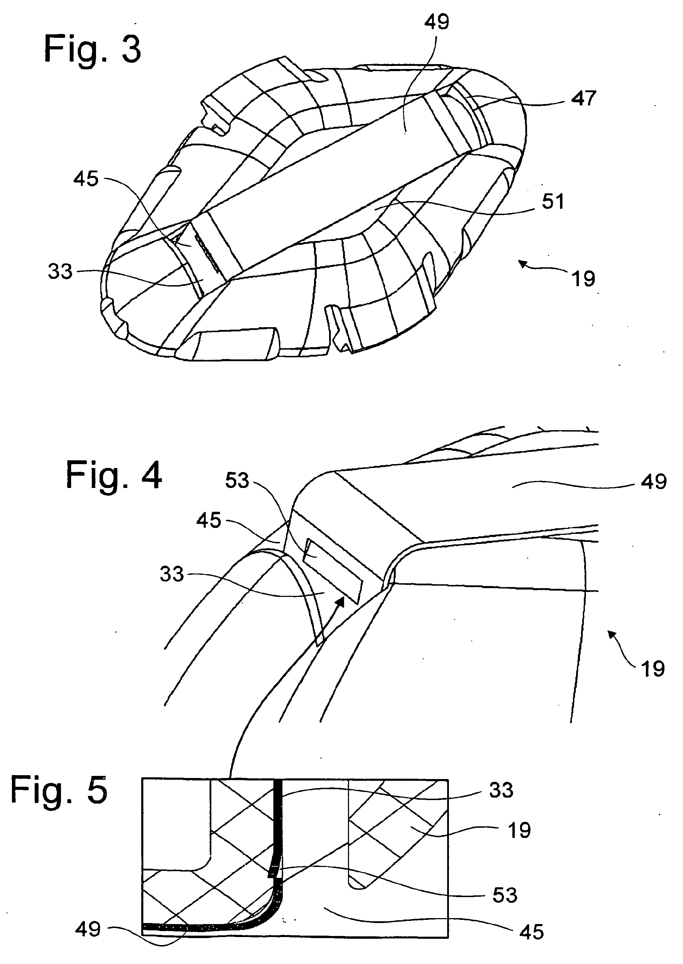

Die Fig. 3 bis 5 zeigen eine Alternativlösung zur Fig. 2. Abweichend werden die Tragstege 31; 33 von einem eingeklipsten Bauteil gebildet, das im Wesentlichen einen u-förmigen Querschnitt aufweist. Jeder Tragsteg 31; 33 weist zwei in einem Winkel verlaufende Schenkel auf. Ein erster Schenkel bildet den eigentlichen Tragsteg, der eine Durchgangsöffnung 45; 47 der Lagerkappe 19 durchgreift. Ein zweiter Schenkel 49 stützt sich auf der äußeren Oberseite 51 der Lagerkappe ab, wobei die beiden zweiten Schenkel 49 durch den u-förmigen Aufbau zu einem einzigen Schenkel zusammengefasst sind. Man könnte jedoch auch zwei völlig getrennte Schenkel 49 und damit auch einzelne Tragstege vorsehen.

In den Figuren 4 und 5 ist ein Widerhaken 53 dargestellt, der in die Lagerkappe 19 eingreift und den Tragsteg gegen Herausfallen sichert.

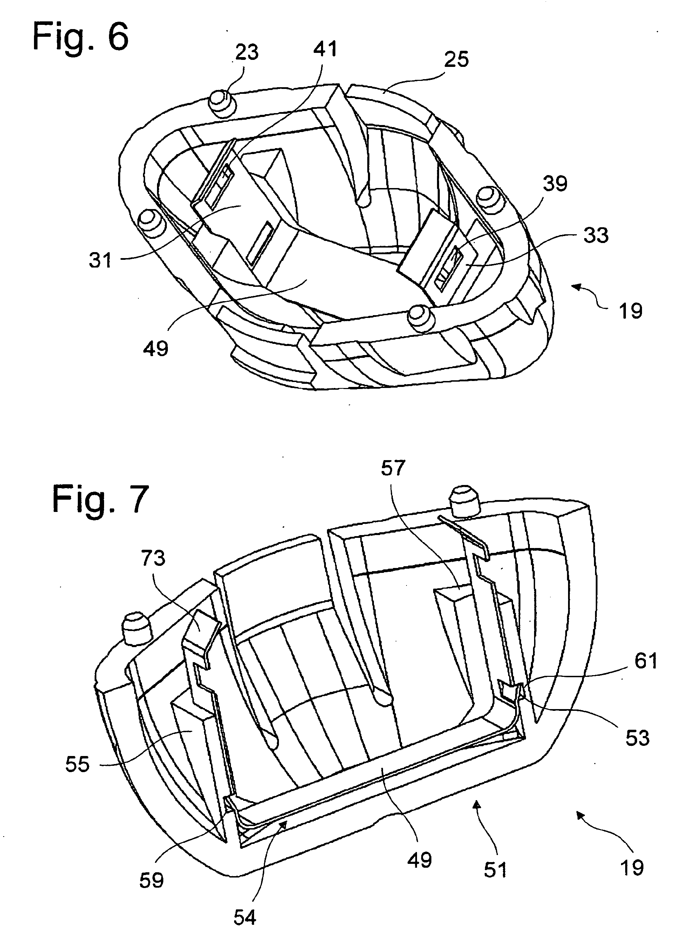

Mit den Figuren 6 und 7 soll verdeutlicht werden, dass man bei der Verwendung von Tragstegen 31; 33 mit einem u-förmigen Querschnitt auch eine geschlossene Deckfläche 51 an der Lagerkappe 19 einhalten kann. Abweichend zur Fig. 4 ist der Verbindungsschenkel 49 zwischen den Tragstege 31; 33 innenseitig in der Lagerkappe 19 auf einer Grundfläche 54 angeordnet. Innerhalb der Lagerkappe ist für beide Tragstege 31; 33 eine dreiseitig wirksame Führung 55; 57 ausgeführt, die die Tragstege einerseits verdrehsichern und andererseits radial abstützen. Die Führungen 55; 57 verfügen über taschenförmige Öffnungen 59; 61, die radial ausgestellte, spreizkeilartig wirksame Federsegmente 63; 65 der Tragstege aufnehmen. Die Federsegmente 63; 65übertragen die Haltekräfte der Tragstege 31; 33 auf die Lagerkappe 19.

In der Fig. 8 ist der Träger 16 nach Fig. 1 als Einzelteil dargestellt. Auf einem äußeren Teilkreis sind Durchgangsöffnungen 67 für nicht dargestellte Befestigungsmittel zur Fahrzeugkarosserie angeordnet. Ein kreisförmiger Ausschnitt 49 bietet Bauraum für das obere Ende der Kolbenstange 5. Aus der Ebene des Trägers sind die beiden gegenüberliegenden Zungen 35; 37 mit einem L-förmigen Querschnitt freigeschnitten. Seitlich zu den Zungen sind vier Öffnungen 71 ausgeführt, deren Abstandsmaße mit den Vorsprüngen 45 der Lagekappe identisch sind.

Bei der Montage wird der Schwingungsdämpfer nach Figur 1 mit dem Träger 16 auf der Oberseite mit einer Lagerkappe 19 bestückt. Dabei gleiten die Einführschrägen 73, s. z. B. Fig. 7, auf der Oberseite der Zungen 35, 37 und drücken die Tragstege 31; 33 parallel zur langen Hauptachse der Grundfläche 29 der Lagerkappe 19. Die Zungen 35; 37 verlaufen in dem von der Lagerkappe begrenzten Bauraum und können in die Aufnahmen 39; 41 der Tragstege 31; 33 einrasten, so dass eine Formschlussverbindung zwischen dem Träger 16 und der Lagerkappe 19 vorliegt. Des Weiteren greifen die Zapfen 23 der Lagekappe 19 in die Öffnungen 71 des Trägers 16 ein. Deshalb überträgt die Verbindung Tragstege 31 33 mit den Aufnahme 39; 41 keine Torsionskräfte zwischen der Lagerkappe 19 und dem Träger 16.

## Patentansprüche

1. Lagerkappe (19) für einen Schwingungsdämpfer (1), wobei die Lagerkappe (19) in eine Befestigungsöffnung (9) eines zu tragenden Bauteils eingreift, auf deren Deckseite radial elastische Zungen (25) anliegen, die den Schwingungsdämpfer axial tragen, solange Befestigungsmittel zwischen einer Lagerung (7) des Schwingungsdämpfers (1) und dem zu tragenden Bauteils noch unmontiert sind,
**dadurch gekennzeichnet,**
**dass** die Lagerkappe (19) radial elastische Haltemittel (31; 33) aufweist, die mit der Lagerung (7) des Schwingungsdämpfers eine Formschlussverbindung eingehen und den Schwingungsdämpfer (1) tragen, wobei die Haltemittel (31; 33) von mindestens einem metallischen Tragsteg zumindest teilunterstützt werden.

2. Lagerkappe nach Anspruch 1,
**dadurch gekennzeichnet,**
**dass** der metallische Tragsteg (31; 33) von dem spritzfähigen Werkstoff der Lagerkappe (19) umspitzt und damit axial eingebunden ist.

3. Lagerkappe nach Anspruch 2,
**dadurch gekennzeichnet,**
**dass** der metallische Tragsteg (31; 33) im Fußbereich (43) von der Lagerkappe (19) eingebunden ist.

4. Lagerkappe nach Anspruch 1,
**dadurch gekennzeichnet,**
**dass** der Tragsteg zwei in einem Winkel zueinander verlaufende Schenkel aufweist, wobei ein axial verlaufender Schenkel (31; 33) in die Lagerung (7) eingreift und der zweite Schenkel (49) auf einer Deckfläche (51; 54) der Lagerkappe (19) anliegt.

5. Lagerkappe nach Anspruch 4,
**dadurch gekennzeichnet,**
**dass** die Lagerkappe (19) eine Durchgangsöffnung (45; 49) für den axial verlaufenden Schenkel (31; 33) aufweist und sich der zweite Schenkel (49) auf der Oberseite (51) der Lagerkappe (19) abstützt.

6. Lagerkappe nach Anspruch 4,
**dadurch gekennzeichnet,**
**dass** die Tragsteg (31; 33) einen im Wesentlichen u-förmigen Querschnitt mit zwei Haltemitteln (39; 41) aufweisen.

7. Lagerkappe nach Anspruch 4,
**dadurch gekennzeichnet,**
**dass** der Tragsteg (31; 33) mindestens einen Widerhaken (53) aufweist, der den Tragsteg (31; 33) gegen Herausfallen aus der Lagerkappe (19) sichert.

8. Lagerkappe nach Anspruch 4,
**dadurch gekennzeichnet,**
**dass** der Tragsteg (31; 33) mindestens ein radial ausgestelltes Federsegment (53) aufweist, das in eine Öffnung (59; 61) der Lagerkappe (19) eingreift.

9. Lagerkappe nach Anspruch 4,
**dadurch gekennzeichnet,**
**dass** der Tragsteg (31; 33; 49) auf der inneren Deckseite (54) der Lagerkappe (19) aufliegt.

## Claims

1. Bearing cap (19) for a vibration damper (1), the bearing cap (19) engaging into a fastening orifice (9) of a component to be carried, on the cover side of which radially elastic tongues (25) come to bear, which carry the vibration damper axially as long as fastening means are not yet mounted between a mounting (7) of the vibration damper (1) and the component to be carried, **characterized in that** the bearing cap (19) has radially elastic holding means (31; 33) which make a positive connection with the mounting (7) of the vibration damper and carry the vibration damper (1), the holding means (31; 33) being at least partially supported by at least one metallic carrying web.

2. Bearing cap according to Claim 1, **characterized in that** the metallic carrying web (31; 33) has the injectable material of the bearing cap (19) injection-moulded around it and is consequently tied in axially.

3. Bearing cap according to Claim 1, **characterized in that** the metallic carrying web (31; 33) is tied in in the foot region (43) by the bearing cap (19).

4. Bearing cap according to Claim 1, **characterized in that** the carrying web has two legs running at an angle to one another, an axially running leg (31; 33) engaging into the mounting (7), and the second leg (49) bearing on a cover surface (51; 54) of the bearing cap (19).

5. Bearing cap according to Claim 4, **characterized in that** the bearing cap (19) has a through-orifice (45; 49) for the axially running leg (31; 33), and the second leg (49) is supported on the top side (51) of the bearing cap (19).

6. Bearing cap according to Claim 4, **characterized in that** the carrying web (31; 33) has an essentially u-shaped cross section with two holding means (39; 41).

7. Bearing cap according to Claim 4, **characterized in that** the carrying web (31; 33) has at least one barb (53) which secures the carrying web (31; 33) against falling out of the bearing cap (19).

8. Bearing cap according to Claim 4, **characterized in that** the carrying web (31; 33) has at least one radially set-out spring segment (53) which engages into an orifice (59; 61) of the bearing cap (19).

9. Bearing cap according to Claim 4, **characterized in that** the carrying web (31; 33; 49) lies on the inner cover side (54) of the bearing cap (19).

## Revendications

1. Capuchon de palier (19) pour un amortisseur de vibrations (1), le capuchon de palier (19) venant en prise dans une ouverture de fixation (9) d'un composant à supporter, sur le côté de recouvrement duquel s'appliquent des langues radialement élastiques (25), qui supportent axialement l'amortisseur de vibrations, tant que des moyens de fixation entre un support de palier (7) de l'amortisseur de vibrations (1) et le composant à supporter ne sont pas encore montés,
**caractérisé en ce que**
le capuchon de palier (19) présente des moyens de retenue radialement élastiques (31 ; 33) qui forment avec le support de palier (7) de l'amortisseur de vibrations une connexion par engagement par correspondance géométrique et qui supportent l'amortisseur de vibrations (1), les moyens de retenue (31 ; 33) étant au moins supportés en partie par au moins une nervure de support métallique.

2. Capuchon de palier selon la revendication 1,
**caractérisé en ce que**
la nervure de support métallique (31 ; 33) est surmoulée avec le matériau pulvérisable du capuchon de palier (19) et est intégrée axialement à celui-ci.

3. Capuchon de palier selon la revendication 2,
**caractérisé en ce que**
la nervure de support métallique (31 ; 33) est intégrée dans la partie de base (43) du capuchon de palier (19).

4. Capuchon de palier selon la revendication 1,
**caractérisé en ce que**
la nervure de support présente deux branches s'étendant suivant un certain angle l'une par rapport à l'autre, une branche s'étendant axialement (31 ; 33) venant en prise dans le support de palier (7) et la deuxième branche (49) s'appliquant contre une surface de recouvrement (51 ; 54) du capuchon de palier (19).

5. Capuchon de palier selon la revendication 4,
**caractérisé en ce que**
le capuchon de palier (19) présente une ouverture traversante (45 ; 49) pour la branche s'étendant axialement (31 ; 33) et la deuxième branche (49) s'appuie sur le côté supérieur (51) du capuchon de palier (19).

6. Capuchon de palier selon la revendication 4,
**caractérisé en ce que**
la nervure de support (31 ; 33) présente une section transversale essentiellement en forme de U avec deux moyens de retenue (39 ; 41).

7. Capuchon de palier selon la revendication 4,
**caractérisé en ce que**
la nervure de support (31 ; 33) présente au moins une barbe (53) qui fixe la nervure de support (31 ; 33) pour l'empêcher de tomber du capuchon de palier (19).

8. Capuchon de palier selon la revendication 4,
**caractérisé en ce que**
la nervure de support (31 ; 33) présente au moins un segment de ressort ressortant radialement (53), qui vient en prise dans une ouverture (59 ; 61) du capuchon de palier (19).

9. Capuchon de palier selon la revendication 4,
**caractérisé en ce que**
la nervure de support (31 ; 33 ; 49) repose sur le côté de recouvrement intérieur (54) du capuchon de palier (19).
